# EUROPÄISCHE PATENTSCHRIFT

(11) **EP 2 908 977 B1**
(45) Veröffentlichungstag und Bekanntmachung des Hinweises auf die Patenterteilung: **30.05.2018**
(21) Anmeldenummer: 13777033.5
(22) Anmeldetag: 14.10.2013
(51) Int. Cl.: B23K 26/073, G02B 3/00, G02B 27/09

(54) **VORRICHTUNG ZUR BEAUFSCHLAGUNG EINER INNENSEITE EINES ZYLINDERS MIT LICHT SOWIE STRAHLTRANSFORMATIONSVORRICHTUNG FÜR EINE DERARTIGE VORRICHTUNG**
DEVICE FOR APPLYING LIGHT TO AN INNER SURFACE OF A CYLINDER AND BEAM TRANSFORMATION DEVICE FOR SUCH A DEVICE
DISPOSITIF D'EXPOSITION D'UNE FACE INTERNE D'UN CYLINDRE À UNE LUMIÈRE ET ÉQUIPEMENT DE TRANSFORMATION DE RAYONNEMENT POUR UN TEL DISPOSITIF

(30) Priorität: 18.10.2012 DE 102012109937
(43) Veröffentlichungstag der Anmeldung: 26.08.2015
(73) Patentinhaber: LIMO GmbH, 44319 Dortmund (DE)
(72) Erfinder: LISSOTSCHENKO, Vitalij, 58730 Fröndenberg (DE); MIKHAILOV, Aleksei, 44319 Dortmund (DE)
(74) Vertreter: Basfeld, Rainer
(86) Internationale Anmeldenummer: PCT/EP2013/071391
(87) Internationale Veröffentlichungsnummer: WO 2014/060337

(56) Entgegenhaltungen:
- EP-A1- 0 282 593
- EP-A1- 1 508 397
- WO-A1-91/04829
- WO-A1-2005/070610
- DE-A1-102007 035 717
- DE-A1-102010 053 781
- JP-A- H06 262 384
- US-A- 4 551 628
- US-A- 5 109 465

## Beschreibung

Die vorliegende Erfindung betrifft eine Strahltransformationsvorrichtung gemäß dem Oberbegriff des Anspruchs 1 sowie eine Vorrichtung zur Beaufschlagung einer Innenseite eines Zylinders mit Licht gemäß dem Oberbegriff des Anspruchs 2.

Definitionen: Die Bezeichnungen Licht oder Beleuchtung oder Laserstrahlung sollen nicht auf den Bereich sichtbaren Lichts einschränken. Vielmehr werden die Bezeichnungen Licht oder Beleuchtung oder Laserstrahlung im Rahmen dieser Anmeldung für elektromagnetische Strahlung im gesamten Wellenlängenbereich vom FIR bis zum XUV verwendet. In Ausbreitungsrichtung der Laserstrahlung oder des Lichts meint mittlere Ausbreitungsrichtung der Laserstrahlung oder des Lichts, insbesondere wenn diese keine ebene Welle ist oder zumindest teilweise divergent ist. Mit Laserstrahl, Lichtstrahl, Teilstrahl oder Strahl kann nicht nur ein idealisierter Strahl der geometrischen Optik gemeint sein, sondern auch ein realer Lichtstrahl, wie beispielsweise ein Laserstrahl mit einem Gauß-Profil oder einem modifizierten Gauß-Profil wie einem Supergauß-Profil oder einem Top-Hat-Profil, der keinen infinitesimal kleinen, sondern einen ausgedehnten Strahlquerschnitt aufweist.

Beispielsweise kann die eingangs genannte Vorrichtung dazu dienen, die Innenseite eines Rohres gezielt mit einer kreisförmigen Intensitätsverteilung von Laserlicht zu beaufschlagen, um diese Innenseite zu bearbeiten. Beispielsweise kann mit einer sich in Rohrlängsrichtung fortbewegenden Intensitätsverteilung die Innenseite eines Rohres sukzessive getempert werden. Auf diese Weise kann beispielsweise eine Beschichtung auf der Innenseite des Rohres behandelt werden.

Eine Strahltransformationsvorrichtung der eingangs genannten Art ist aus der DE 10 2010 053 781 A1 bekannt. Die darin beschriebene Strahltransformationsvorrichtung umfasst eine Mehrzahl von keilförmigen Arrays von Zylinderlinsen. Die Arrays sind so nebeneinander angeordnet, dass sie zusammen eine polygonale Fläche, insbesondere eine achteckige Fläche abdecken. Die Zylinderachsen der Zylinderlinsen benachbarter Arrays schließen dabei jeweils einen Winkel von 45° miteinander ein.

Eine Vorrichtung der eingangs genannten Art ist aus der WO 91/04829 A1 bekannt. Die darin beschriebene Vorrichtung umfasst ein Homogenisatormittel mit einer zylindrischen Innenfläche, an der das Licht nach dem Eintreten und vor dem Austreten reflektiert werden kann. Die Vorrichtung umfasst weiterhin ein Axikon zur Einbringung von Licht in das Homogenisatormittel und eine als Fokussiermittel dienende Linse, die aus dem Homogenisatormittel austretendes Licht auf die Innenseite eines mit Licht zu beaufschlagenden Zylinders fokussieren kann.

Die Aufgabe der vorliegenden Erfindung ist die Schaffung einer Vorrichtung der eingangs genannten Art, die einen möglichst homogenen, umlaufenden Fokusbereich auf der Innenseite des mit Licht zu beaufschlagenden Zylinders erzeugen kann, wobei der Fokusbereich insbesondere auch möglichst dünn sein soll. Weiterhin soll eine Strahltransformationsvorrichtung geschaffen werden, die für eine derartige Vorrichtung geeignet ist.

Dies wird durch eine Strahltransformationsvorrichtung der eingangs genannten Art mit den kennzeichnenden Merkmalen des Anspruchs 1 sowie durch eine Vorrichtung der eingangs genannten Art mit den kennzeichnenden Merkmalen des Anspruchs 2 erreicht. Die Unteransprüche betreffen bevorzugte Ausgestaltungen der Erfindung.

Gemäß Anspruch 1 ist vorgesehen, dass die Zylinderlinsenarrays ringförmig nebeneinander angeordnet sind und jeweils Zylinderlinsen aufweisen, deren Zylinderachsen unter einem Winkel von 45° zu der radialen Richtung der ringförmigen Anordnung ausgerichtet sind. Eine derartige Strahltransformationsvorrichtung kann die Einheitsvektoren von Teilstrahlen des durch die Strahltransformationsvorrichtung hindurchtretenden Lichts um 90° drehen beziehungsweise eine Drehung des Azimutwinkels eines durch die Strahltransformationsvorrichtung hindurchtretenden Lichtstrahls um 90° bewirken.

Gemäß Anspruch 2 ist vorgesehen, dass die Vorrichtung eine erfindungsgemäße Strahltransformationsvorrichtung umfasst, die vor dem Homogenisatormittel angeordnet ist, so dass durch die Strahltransformationsvorrichtung hindurchgetretenes Licht in das Homogenisatormittel eintreten kann. Durch die von einer derartigen Strahltransformationsvorrichtung hervorgerufenen Drehung der Einheitsvektoren beziehungsweise der Azimutwinkel des Lichts um 90° wird diesem eine sagittale Komponente hinzugefügt, die den Homogenisierungseffekt des Homogenisatormittels verstärkt.

Es kann vorgesehen sein, dass die Homogenisatormittel als Hohlzylinder ausgebildet sind, wobei insbesondere die innere Mantelfläche des Hohlzylinders reflektierend ausgebildet ist. Durch diese Gestaltung kann Licht, das sich durch den Hohlzylinder hindurch bewegt, aufgrund mehrfacher Reflexionen homogenisiert werden.

Es besteht dabei die Möglichkeit, dass die innere Mantelfläche des Hohlzylinders strukturiert ist. Durch die Strukturierung wird gewährleistet eine gute Homogenisierung des kreisförmigen Fokusbereichs auf der Innenseite des Zylinders. Dabei kann vorgesehen sein, dass die Strukturierung als reflektierendes Array von Hohlzylinderabschnitten auf der inneren Mantelfläche angeordnet ist. Im Querschnitt ist damit ein reflektierendes Array von Kreisbögen zu einem Kreis zusammengerollt. Eine derartige Strukturierung funktioniert ähnlich wie ein flaches Zylinderlinsenarray, das üblicherweise für die Lichthomogenisierung benutzt wird.

Es besteht die Möglichkeit, anstelle eines Hohlzylinders einen insbesondere massiven Lichtleiter als Homogenisatormittel zu verwenden. Auch in diesem kann das Licht durch mehrfache innere Reflexionen homogenisiert werden.

Es kann vorgesehen sein, dass die Fokussiermittel als Linsenmittel, insbesondere als toroidales Linsenmittel, oder als Spiegelmittel, insbesondere als toroidales Spiegelmittel ausgebildet sind oder ein Linsenmittel, insbesondere ein toroidales Linsenmittel, und/oder ein Spiegelmittel, insbesondere ein toroidales Spiegelmittel umfassen. Derartige Fokussiermittel können einen kreisförmigen Fokusbereichs auf der Innenseite des Zylinders mit vergleichsweise geringer Linienbreite gewährleisten.

Es kann vorgesehen sein, dass die Vorrichtung Strahlaufweitungsmittel umfasst, die das Licht vor dem Eintritt in die Strahltransformationsvorrichtung und/oder in das Homogenisatormittel so aufweiten und/oder formen können, dass der Strahlquerschnitt des Lichts außermittig ein Intensitätsmaximum oder mehrere Intensitätsmaxima aufweist. Durch eine derartige Maßnahme kann die Fokussierung in einen kreisförmigen Fokusbereich auf der Innenseite des Zylinders vereinfacht werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Seitenansicht einer ersten Ausführungsform einer erfindungsgemäßen Vorrichtung;
- Fig. 2: eine schematische Seitenansicht einer zweiten Ausführungsform einer erfindungsgemäßen Vorrichtung;
- Fig. 3: eine für meridionale Strahlen typische Verteilung von Strahltrajektorien in einer Projektion auf eine Ebene senkrecht zur Zylinderachse des Homogenisatormittels;
- Fig. 4: eine für sagittale Strahlen typische Verteilung von Strahltrajektorien in einer Projektion auf eine Ebene senkrecht zur Zylinderachse des Homogenisatormittels;
- Fig. 5: eine für die Ausführungsbeispiele gemäß Fig. 1 und Fig. 2 typische Verteilung von Strahltrajektorien in einer Projektion auf eine Ebene senkrecht zur Zylinderachse des Homogenisatormittels;
- Fig. 6: eine perspektivische Ansicht eines Homogenisatormittels;
- Fig. 7: eine schematische Ansicht, die die Einheitsvektoren des Lichts in einer Projektion auf eine Ebene senkrecht zur mittleren Ausbreitungsrichtung des Lichts vor dem Eintritt in die Strahltransformationsvorrichtung zeigt;
- Fig. 8: eine schematische Ansicht, die die Einheitsvektoren des Lichts in einer Projektion auf eine Ebene senkrecht zur mittleren Ausbreitungsrichtung des Lichts nach dem Austritt aus der Strahltransformationsvorrichtung zeigt;
- Fig. 9: eine schematische Seitenansicht einer Ausführungsform einer erfindungsgemäßen Strahltransformationsvorrichtung;

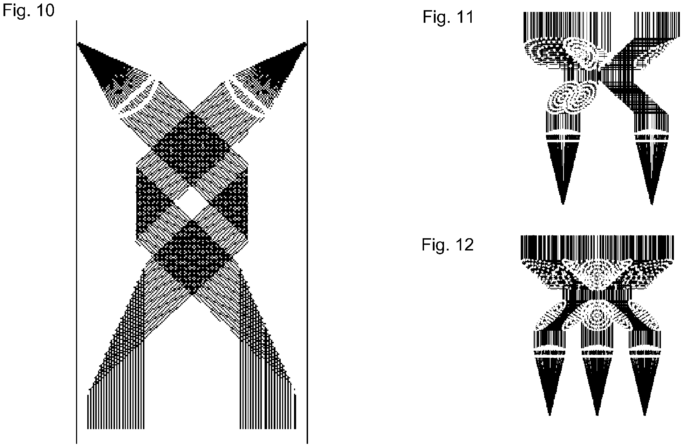

- Fig. 10: eine schematische Seitenansicht der Strahlengänge des Lichts im oberen Bereich einer erfindungsgemäßen Vorrichtung, bei der drei Lichtquellen verwendet werden;
- Fig. 11: eine zu Fig. 10 korrespondierende schematische Seitenansicht der Strahlengänge des Lichts im unteren Bereich der Vorrichtung;
- Fig. 12: eine zu Fig. 10 korrespondierende gegenüber Fig. 11 um 90° gedrehte schematische Seitenansicht der Strahlengänge des Lichts im unteren Bereich der Vorrichtung;
- Fig. 13: einen schematischen Querschnitt durch das Licht im Bereich der Lichtquellen bei der Verwendung von drei Lichtquellen;
- Fig. 14: einen schematischen Querschnitt durch das Licht nach den Kollimatormitteln;
- Fig. 15: einen schematischen Querschnitt durch das Licht nach den Komprimiermitteln;
- Fig. 16: einen schematischen Querschnitt durch das Licht vor der Strahltransformationsvorrichtung;
- Fig. 17: eine beispielhafte lokale Intensitätsverteilung des Lichts auf der Innenseite des mit Licht zu beaufschlagenden Zylinders für den Fall, dass keine Strahltransformationsvorrichtung verwendet wird;
- Fig. 18: eine beispielhafte lokale Intensitätsverteilung des Lichts auf der Innenseite des mit Licht zu beaufschlagenden Zylinders für den Fall, dass eine erfindungsgemäße Strahltransformationsvorrichtung verwendet wird;
- Fig. 19: eine Gesamtintensitätsverteilung des Lichts auf der Innenseite des mit Licht zu beaufschlagenden Zylinders für den Fall, dass kein Homogenisatormittel verwendet wird;
- Fig. 20: eine Gesamtintensitätsverteilung des Lichts auf der Innenseite des mit Licht zu beaufschlagenden Zylinders für den Fall, dass ein Homogenisatormittel verwendet wird.

In den Figuren werden gleiche oder funktional gleiche Teile oder Lichtstrahlen mit gleichen Bezugszeichen versehen.

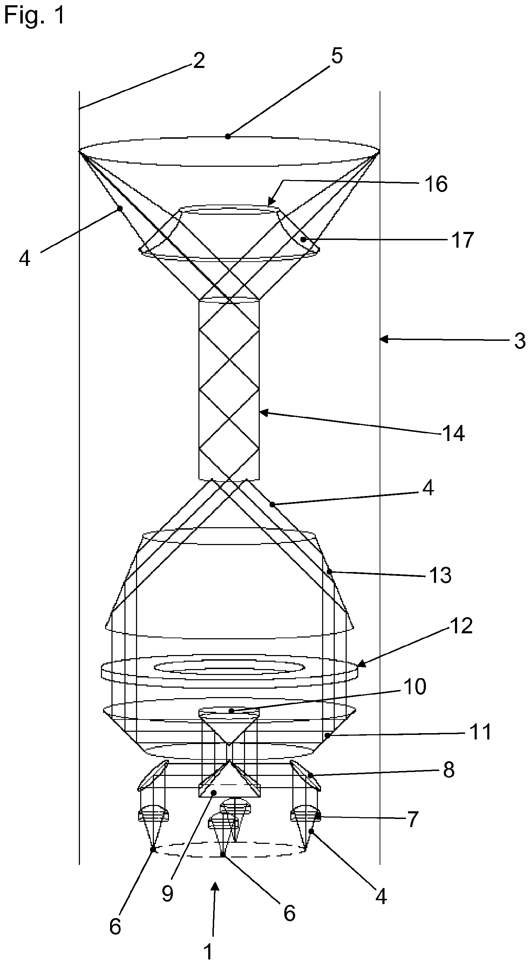

Die in Fig. 1 abgebildete Ausführungsform einer erfindungsgemäßen Vorrichtung 1 dient zur Beaufschlagung einer Innenseite 2 eines schematisch dargestellten Zylinders 3 mit Licht 4. Insbesondere soll mit der erfindungsgemäßen Vorrichtung 1 ein kreisförmiger Fokusbereich 5 auf der Innenseite 2 des Zylinders 3 erzeugt werden. Die Vorrichtung 1 befindet sich in dem abgebildeten Ausführungsbeispiel in dem Zylinder 3.

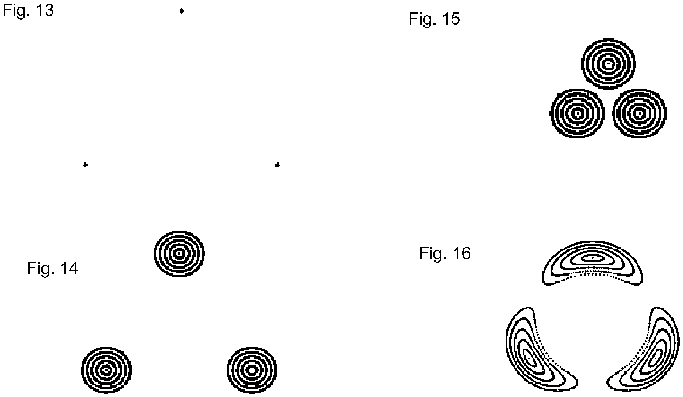

In dem abgebildeten Ausführungsbeispiel umfasst die Vorrichtung 1 vier Lichtquellen 6, die beispielsweise die Enden von Lichtleitfasern sein können, wobei in die Lichtleitfasern Laserlicht eingekoppelt werden kann. Das von den Lichtquellen 6 ausgehende Licht 4 (siehe beispielhafte Verteilung mit drei Lichtquellen in Fig. 13) wird von Kollimiermitteln 7 kollimiert (siehe beispielhafte Verteilung mit drei Lichtquellen in Fig. 14) und von Spiegeln 8 auf Komprimiermittel 9 reflektiert, wobei die Komprimiermittel 9 durch eine reflektierende vierseitige Pyramide realisiert sind. Fig. 15 zeigt eine beispielhafte Verteilung nach den Komprimiermitteln 9 für drei Lichtquellen.

Die Vorrichtung umfasst weiterhin einen Konus 10 mit einer reflektierenden Außenseite, auf die das komprimierte Licht 4 von der Pyramide reflektiert wird. Ausgehend von diesem Konus 10 wird das Licht 4 radial nach außen auf die reflektierende Innenseite eines Hohlkonus 11 gelenkt und von dieser nach oben in Fig. 1 reflektiert, so dass sich das Licht 4 nun wieder in axialer Richtung des Zylinders 3 bewegt.

Der Konus 10 mit der reflektierenden Außenseite und der Hohlkonus 11 mit der reflektierenden Innenseite bilden zusammen Strahlaufweitungsmittel, die das Licht 4 so aufweiten und formen können, dass der Strahlquerschnitt des Lichts außermittig ein Intensitätsmaximum oder mehrere Intensitätsmaxima aufweist. Siehe dazu die beispielhafte Verteilung mit drei Lichtquellen in Fig. 16.

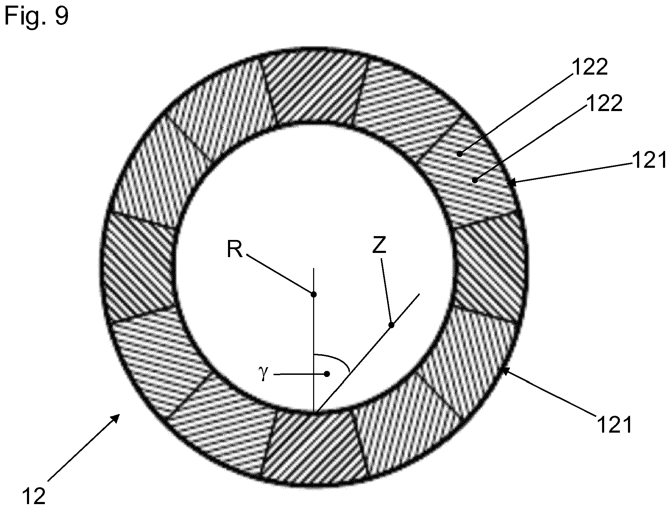

In Ausbreitungsrichtung des Lichts 4 hinter dem Hohlkonus 11 ist eine erste Ausführungsform einer erfindungsgemäßen Strahltransformationsvorrichtung 12 angeordnet. Die Strahltransformationsvorrichtung 12 ist in Fig. 9 noch einmal detaillierter abgebildet.

Die Strahltransformationsvorrichtung 12 umfasst eine Mehrzahl von Zylinderlinsenarrays 121, die jeweils eine Mehrzahl von Zylinderlinsen 122 aufweisen. Die einzelnen Zylinderlinsenarrays 121 sind ringförmig angeordnet. Eine jede der Zylinderachsen Z der Zylinderlinsen 122 ist etwa unter einem Winkel γ von 45° zur radialen Richtung R des Rings ausgerichtet.

Die einzelnen Zylinderlinsen 122 sind beispielsweise als bikonvexe Linsen ausgebildet mit einer konvexen Fläche auf der Eintrittsseite und einer konvexen Fläche auf der Austrittsseite der Strahltransformationsvorrichtung 12. Dabei entspricht der Abstand dieser beiden konvexen Flächen zueinander insbesondere der Summe der Brennweiten dieser beiden konvexen Flächen beziehungsweise der doppelten Brennweite der konvexen Flächen, wenn die Brennweiten gleich sind. Damit wird durch eine jede der Zylinderlinsen 122 ein Keplerteleskop gebildet.

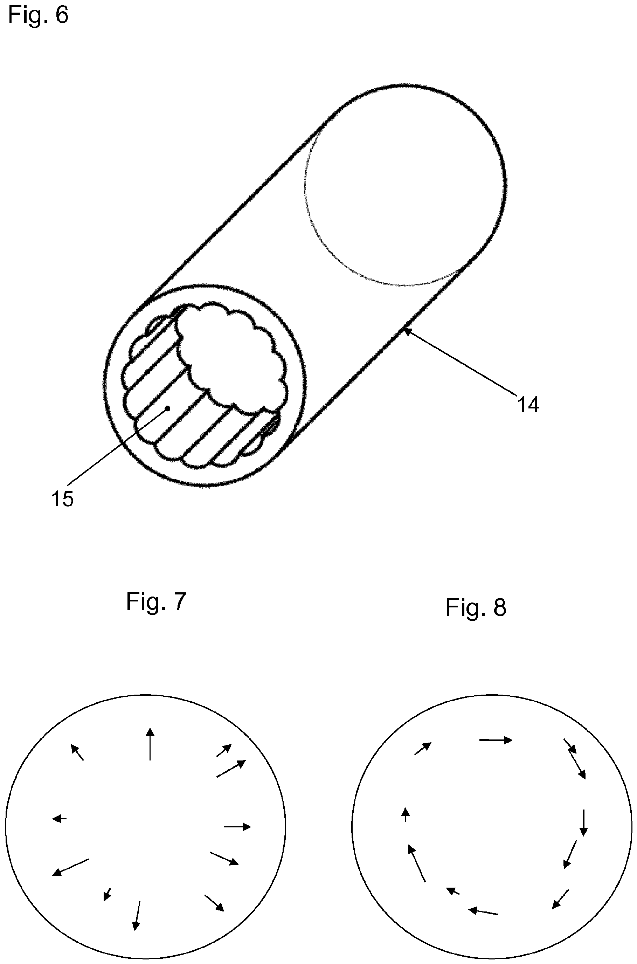

Fig. 7 und Fig. 8 zeigen jeweils schematische Ansichten, die die Einheitsvektoren von Teilstrahlen des Lichts 4 in einer Projektion auf eine Ebene senkrecht zur mittleren Ausbreitungsrichtung des Lichts 4 vor dem Eintritt in die und nach dem Austritt aus der Strahltransformationsvorrichtung 12 verdeutlichen. Es zeigt sich, dass durch die unter einem Winkel von 45° zur radialen Richtung ausgerichteten Zylinderlinsen die Einheitsvektoren um 90° gedreht werden.

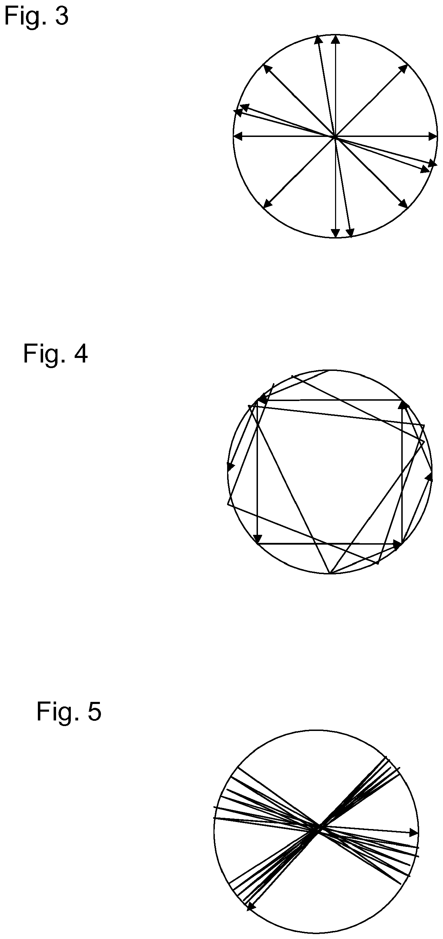

Dadurch wird den vorher kollimierten Teilstrahlen des Lichts 4 eine sagittale Komponente hinzugefügt. Fig. 3 bis Fig. 5 verdeutlichen diesen Zusammenhang. Fig. 3 bis Fig. 5 zeigen Verteilungen von Strahltrajektorien in einer Projektion auf eine Ebene senkrecht zur Zylinderachse eines zylindrischen Mediums, in dem sich das Licht bewegt. Dabei verdeutlicht Fig. 3 eine für meridionale Strahlen typische Verteilung und Fig. 4 eine für sagittale Strahlen typische Verteilung von Strahltrajektorien.

Die Teilstrahlen des Lichts 4 weisen bei entsprechend vollständiger Kollimation im Wesentlichen nur eine meridionale Komponente auf. Durch den Hindurchtritt durch die Strahltransformationsvorrichtung 12 wird den Teilstrahlen des Lichts 4 eine sagittale Komponente hinzugefügt. Eine derartige mit einer sagittalen Komponente versehene Verteilung zeigt Fig. 5.

Hinter der Strahltransformationsvorrichtung 12 ist in Ausbreitungsrichtung des Lichts 4 ein weiterer Hohlkonus 13 mit einer reflektierende Innenseite angeordnet. Von der Innenseite des Hohlkonus 13 wird das Licht 4 in ein Homogenisatormittel 14 reflektiert, das in Fig. 6 schematisch abgebildet ist.

Das Homogenisatormittel 14 ist als Hohlzylinder mit einer reflektierenden, strukturierten Innenfläche 15 ausgebildet. Die Strukturen der Innenfläche 15 sind konkave Zylinderabschnitte, deren Zylinderachsen parallel zur Zylinderachse des Hohlzylinders verlaufen. Dabei schließen die konkaven Zylinderabschnitte in Umfangsrichtung des Hohlzylinders aneinander an. Das Homogenisatormittel 14 kann deutlich länger sein als in der schematischen Abbildung gemäß Fig. 6 dargestellt.

In dem Homogenisatormittel 14 wird das Licht 4 durch vielfache Reflexionen an der Innenseite 15 derart homogenisiert, dass längs des kreisförmigen Fokusbereichs 5 im Wesentlichen überall die gleiche Intensität vorliegt. Die Homogenisierung wird dadurch verbessert, dass wie unter Bezugsnahme auf die Fig. 3 bis Fig. 5 beschrieben dem Licht 4 durch die Strahltransformationsvorrichtung 12 eine sagittale Komponente beigemischt wird.

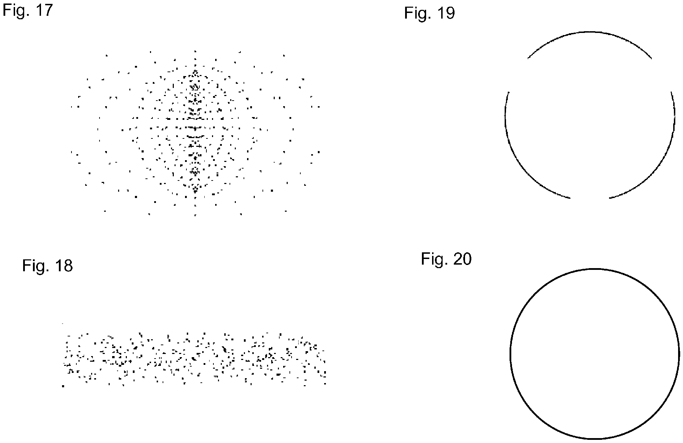

Die Fig. 17 verdeutlicht, wie gering die Homogenität ohne die Strahltransformationsvorrichtung 12 ist. Dagegen zeigt die Fig. 18 eine sehr homogene Verteilung des Lichts 4 über den kreisförmigen Fokusbereich 5. Die Fig. 19 verdeutlicht, wie gering die Homogenität ohne das Homogenisatormittel 14 ist. Dagegen zeigt die Fig. 20 eine sehr homogene Verteilung des Lichts 4 über den kreisförmigen Fokusbereich 5.

Die Strukturierung des Homogenisatormittels 14 gewährleistet ebenfalls eine gute Homogenisierung des kreisförmigen Fokusbereichs 5 auf der Innenseite 2 des Zylinders 3.

Das aus dem Homogenisatormittel 14 austretende Licht 4 wird von einem als Fokussiermittel dienenden Linsenmittel 16 auf die Innenseite 2 des mit Licht 4 zu beaufschlagenden Zylinders 3 fokussiert. Das Linsenmittel 16 ist insbesondere als toroidales Linsenmittel 16 ausgebildet, so dass ein kreisförmiger Fokusbereich 5 auf der Innenseite 2 des Zylinders 3 erzeugt wird. Dabei weist das toroidale Linsenmittel 16 eine umlaufende torusförmige Außenfläche 17 auf, von der das Licht 4 so gebrochen wird, dass es auf die Innenseite 2 des Zylinders 3 fokussiert wird.

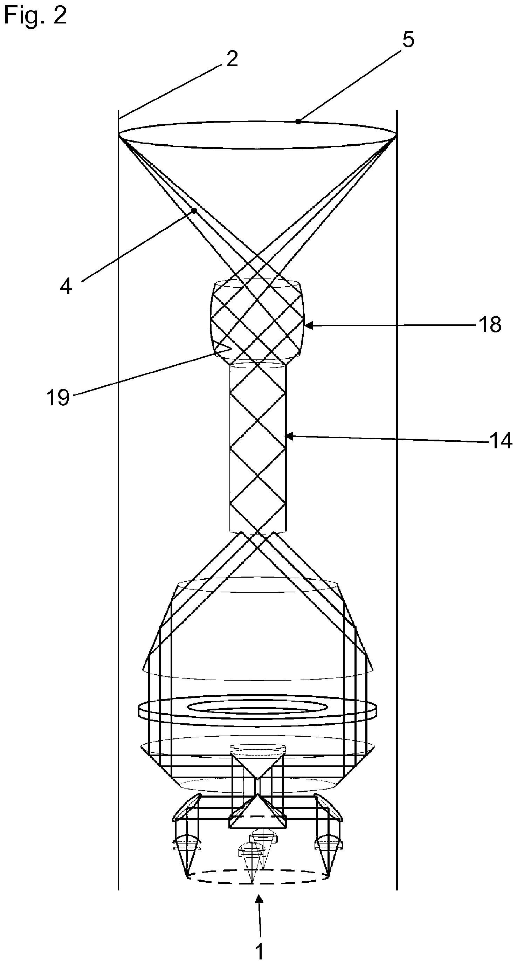

Die zweite Ausführungsform gemäß Fig. 2 unterscheidet sich von der ersten Ausführungsform gemäß Fig. 1 dadurch, dass sie anstelle des Linsenmittels 16 ein ebenfalls als Fokussiermittel dienendes Spiegelmittel 18 aufweist. Das Spiegelmittel 18 ist insbesondere als toroidales Spiegelmittel 18 ausgebildet, so dass auch von dem toroidalen Spiegelmittel 18 ein kreisförmiger Fokusbereich 5 auf der Innenseite 2 des Zylinders 3 erzeugt wird. Dabei weist das toroidale Spiegelmittel 18 eine verspiegelte torusförmige Innenfläche 19 auf, von der das Licht 4 auf die Innenseite 2 des Zylinders 3 reflektiert wird.

## Patentansprüche

1. Strahltransformationsvorrichtung (12) für Licht, umfassend eine Mehrzahl von Zylinderlinsenarrays (121), **dadurch gekennzeichnet, dass** die Zylinderlinsenarrays (121) ringförmig nebeneinander angeordnet sind und jeweils Zylinderlinsen (122) aufweisen, deren Zylinderachsen (Z) unter einem Winkel (γ) von 45° zu der radialen Richtung (R) der ringförmigen Anordnung ausgerichtet sind.

2. Vorrichtung (1) zur Beaufschlagung einer Innenseite (2) eines Zylinders (3) mit Licht (4), umfassend
- ein Homogenisatormittel (14), in das Licht (4) eintreten und aus dem das Licht (4) wieder austreten kann, wobei das Homogenisatormittel (14) eine zylindrische Innenfläche (15) aufweist, an der das Licht (4) nach dem Eintreten und vor dem Austreten reflektiert werden kann,
- Mittel zur Einbringung von Licht (4) in das Homogenisatormittel (14),
- Fokussiermittel, die aus dem Homogenisatormittel (14) austretendes Licht (4) auf die Innenseite (2) des mit Licht (4) zu beaufschlagenden Zylinders (3) fokussieren können,
**dadurch gekennzeichnet, dass** die Vorrichtung (1) eine Strahltransformationsvorrichtung (12) nach Anspruch 1 umfasst, die vor dem Homogenisatormittel (14) angeordnet ist, so dass durch die Strahltransformationsvorrichtung (12) hindurchgetretenes Licht (4) in das Homogenisatormittel (14) eintreten kann.

3. Vorrichtung nach Anspruch 2, **dadurch gekennzeichnet, dass** die Homogenisatormittel (14) als Hohlzylinder ausgebildet sind, wobei insbesondere die innere Mantelfläche des Hohlzylinders reflektierend ausgebildet ist.

4. Vorrichtung nach Anspruch 3, **dadurch gekennzeichnet, dass** die innere Mantelfläche des Hohlzylinders strukturiert ist

5. Vorrichtung nach Anspruch 4, **dadurch gekennzeichnet, dass** die Strukturierung als reflektierendes Array von Hohlzylinderabschnitten auf der inneren Mantelfläche angeordnet ist.

6. Vorrichtung nach einem der Ansprüche 2 bis 5, **dadurch gekennzeichnet, dass** die Fokussiermittel als Linsenmittel (16), insbesondere als toroidales Linsenmittel (16), oder als Spiegelmittel (18), insbesondere als toroidales Spiegelmittel (18) ausgebildet sind oder ein Linsenmittel (16), insbesondere ein toroidales Linsenmittel (16), und/oder ein Spiegelmittel (18), insbesondere ein toroidales Spiegelmittel (18) umfassen.

7. Vorrichtung nach einem der Ansprüche 2 bis 6, **dadurch gekennzeichnet, dass** die Vorrichtung Strahlaufweitungsmittel umfasst, die das Licht (4) vor dem Eintritt in die Strahltransformationsvorrichtung (12) und/oder in das Homogenisatormittel (14) so aufweiten und/oder formen können, dass der Strahlquerschnitt des Lichts (4) außermittig ein Intensitätsmaximum oder mehrere Intensitätsmaxima aufweist.

## Claims

1. Beam transformation device (12) for light, comprising a plurality of cylindrical lens arrays (121), **characterised in that** the cylindrical lens arrays (121) are arranged annularly adjacent to one another and each comprise cylindrical lenses (122) having cylinder axes (Z) oriented at an angle (γ) of 45° with respect to the radial direction (R) of the annular arrangement.

2. Device (1) for applying light (4) to an inner surface (2) of a cylinder (3), comprising
- a homogeniser means (14), into which light (4) can enter and from which light (4) can exit again, wherein the homogeniser means (14) has a cylindrical inner surface (15), at which the light (4) can be reflected after entering and before exiting,
- means for introducing light (4) into the homogeniser means (14),
- focusing means which can focus light (4) exiting from the homogeniser means (14) onto the inner surface (2) of the cylinder (3) to which the light (4) is to be applied,
**characterised in that**
- the device (1) comprises a beam transformation device (12) according to claim 1 arranged in front of the homogeniser means (14), so that light (4) that has passed through the beam transformation device (12) can enter into the homogeniser means (14).

3. Device according to claim 2, **characterised in that** the homogeniser means (14) are formed as hollow cylinder, wherein in particular the inner jacket surface of the hollow cylinder is designed to be reflective.

4. Device according to claim 3, **characterised in that** the inner jacket surface of the hollow cylinder is structured.

5. Device according to claim 4, **characterised in that** the structuring is arranged on the inner jacket surface as a reflective array of hollow cylinder sections.

6. Device according to any of claims 2 to 5, **characterised in that** the focusing means are formed as lens means (16), in particular as toroidal lens means (16), or as mirror means (18), in particular as toroidal mirror means (18), or comprise a lens means (16), in particular a toroidal lens means (16), and/or a mirror means (18), in particular a toroidal mirror means (18).

7. Device according to any of claims 2 to 6, **characterised in that** the device comprises beam expanding means which can expand and/or shape the light (4) prior to entering the beam transformation device (12) and/or the homogeniser means (14), so that the beam cross-section of the light (4) has off-center an intensity maximum or several intensity maxima.

## Revendications

1. Équipement de transformation de rayonnement (12) pour lumière,
comprenant une pluralité de réseaux de lentilles cylindriques (121), **caractérisé en ce que** les réseaux de lentilles cylindriques (121) sont agencés l'un à côté de l'autre en forme d'anneau et présentent respectivement des lentilles cylindriques (122), dont les axes de cylindre (Z) sont orientés avec un angle (γ) de 45° par rapport à la direction radiale (R) de l'agencement annulaire.

2. Dispositif (1) d'exposition d'une face interne (2) d'un cylindre (3) à une lumière (4), comprenant
- un moyen homogénéisateur (14), dans lequel peut entrer une lumière (4) et duquel peut ressortir la lumière (4), dans lequel le moyen homogénéisateur (14) présente une face interne cylindrique (15), sur laquelle une fois entrée et avant de sortir, la lumière (4) peut se réfléchir,
- des moyens d'introduction de la lumière (4) dans le moyen homogénéisateur (14),
- des moyens de focalisation, qui permettent la focalisation de la lumière (4), sortant du moyen homogénéisateur (14), sur la face interne (2) du cylindre (3) à exposer à la lumière (4),
**caractérisé en ce que** le dispositif (1) comprend un équipement de transformation de rayonnement (12) selon la revendication 1, qui est agencé avant le moyen homogénéisateur (14) de sorte que la lumière (4) qui a traversé l'équipement de transformation de rayonnement (12) puisse entrer dans le moyen homogénéisateur (14).

3. Dispositif selon la revendication 2, **caractérisé en ce que** les moyens homogénéisateurs (14) sont réalisés en tant que cylindre creux, dans lequel en particulier la surface d'enveloppe intérieure du cylindre creux est réalisée de manière réfléchissante.

4. Dispositif selon la revendication 3, **caractérisé en ce que** la surface d'enveloppe intérieure du cylindre creux est structurée.

5. Dispositif selon la revendication 4, **caractérisé en ce que** la structuration est agencée en tant que réseau réfléchissant de sections de cylindre creux sur la surface d'enveloppe intérieure.

6. Dispositif selon l'une quelconque des revendications 2 à 5, **caractérisé en ce que** les moyens de focalisation sont réalisés en tant que moyen de lentille (16), en particulier en tant que moyen de lentille toroïdal (16), ou en tant que moyen de miroir (18), en particulier en tant que moyen de miroir toroïdal (18) ou comprennent un moyen de lentille (16), en particulier un moyen de lentille toroïdal (16), et/ou un moyen de miroir (18), en particulier un moyen de miroir toroïdal (18).

7. Dispositif selon l'une quelconque des revendications 2 à 6, **caractérisé en ce que** le dispositif comprend des moyens d'élargissement de rayonnement, qui peuvent élargir et/ou former la lumière (4) avant l'entrée dans l'équipement de transformation de rayonnement (12) et/ou dans le moyen homogénéisateur (14) de sorte que la section transversale de rayonnement de la lumière (4) présente de manière excentrée un maximum d'intensité ou plusieurs maximums d'intensité.
